# EUROPÄISCHE PATENTSCHRIFT

(11) **EP 1 532 708 B1**
(45) Veröffentlichungstag und Bekanntmachung des Hinweises auf die Patenterteilung: **14.06.2006**
(21) Anmeldenummer: 03790749.0
(22) Anmeldetag: 26.08.2003
(51) Int. Cl.: H01M 8/04, H01M 16/00, B60L 11/18

(54) **LEISTUNGSGEREGELTE BRENNSTOFFZELLE**
FUEL CELL WITH A REGULATED OUTPUT
PILE A COMBUSTIBLE A REGULATION DE PUISSANCE

(30) Priorität: 31.08.2002 DE 10240247
(43) Veröffentlichungstag der Anmeldung: 25.05.2005
(73) Patentinhaber: DaimlerChrysler AG, 70567 Stuttgart (DE)
(72) Erfinder: WALTER, Markus, 72555 Metzingen (DE)
(86) Internationale Anmeldenummer: PCT/DE2003/002844
(87) Internationale Veröffentlichungsnummer: WO 2004/021466

(56) Entgegenhaltungen:
- EP-A- 0 136 187
- EP-A- 1 225 082
- WO-A-02/20300
- WO-A-99/46140
- WO-A-03/054993
- PATENT ABSTRACTS OF JAPAN vol. 1998, no. 01, 30. Januar 1998 (1998-01-30) & JP 09 231991 A (TOYOTA MOTOR CORP.), 5. September 1997 (1997-09-05)

## Beschreibung

Eine Brennstoffzelle ist eine Vorrichtung zur direkten Umwandlung chemischer Energie in elektrische Energie, der - anders als einer Batterie - Energieträger in Form von Brennstoff und Oxidationsmittel kontinuierlich zugeführt werden muss. Der Brennstoff herkömmlicher Niedertemperatur-Brennstoffzellen ist Wasserstoff, es sind aber auch Hochtemperatur-Brennstoffzellen bekannt, die bei einer Arbeitstemperatur von ca. 1000°C Kohlenmonoxid, Methan oder Erdgas umsetzen.

Stationär eingesetzte Brennstoffzellen können in Verbindung mit Druckspeichern für Brennstoff und Oxidationsmittel eingesetzt werden, die je nach gewünschter elektrischer Ausgangsleistung der Brennstoffzelle sehr schnell veränderbare Gasströme liefern können.

Für den mobilen Einsatz von Brennstoffzellen, etwa als Energiequelle für Elektrofahrzeuge, kommt die Verwendung von Druckspeichern nicht in Betracht, einerseits aufgrund ihrer hohen, mit den Fahrzeugen zu bewegenden Masse, andererseits aufgrund des Gefahrenpotentials, das ein mit Brennstoff, insbesondere mit Wasserstoff gefüllter Druckspeicher bei einem Unfall des Fahrzeugs birgt.

Für den mobilen Einsatz von Brennstoffzellen sind daher Systeme bevorzugt, die einen sogenannten Reformer einsetzen, der einen nicht direkt von der Brennstoffzelle verwertbaren, dafür aber gut zu transportierenden Energieträger, z.B. Benzin, in einen verwertbaren Energieträger, in der Praxis ein im wesentlichen aus H₂, CO₂ und Wasserdampf bestehendes Gasgemisch, umsetzt. Ein Nachteil der Reformer gegenüber den Druckspeichern ist, dass der von ihnen gelieferte Brennstoffstrom nur langsam veränderbar ist, typischerweise mit einer Zeitkonstanten in der Größenordnung von 100 s, wohingegen der Volumenstrom aus einem Druckspeicher mit einer Zeitkonstanten von nicht mehr als 0,01 s regelbar ist.

Da die Brennstoffzelle in Betrieb stets eine gewisse Menge an Brennstoff enthält, ist es kurzzeitig möglich, mehr elektrische Leistung herauszuziehen, als der zugeführten Brennstoffmenge entspricht, doch führt dies zu unerwünschten Verschiebungen der chemischen Verhältnisse in der Brennstoffzelle. Dies lässt sich bei herkömmlichen Brennstoffzellensystemen nur dadurch vermeiden, dass der vom Reformer zur Verfügung gestellte Brennstoffstrom größer eingestellt wird, als dem normalerweise von der Brennstoffzelle abgenommenen Strom entspricht, so dass für einen plötzlichen Mehrbedarf an elektrischer Leistung eine Brennstoffreserve zur Verfügung steht. Da diese in mobilen Systemen jedoch nicht zum späteren Verbrauch gespeichert werden kann, wird dieser im Überschuss erzeugte Brennstoff zumeist nicht effizient genutzt, was unter ökologischen und wirtschaftlichen Gesichtspunkten unerwünscht ist.

In der gattungsgemäßen EP 0 136 187 A2 ist ein Hybrides Leistungssystem beschrieben, welches einen Brennstoffzellenstapel als primäre Energiequelle und eine oder mehrere Batterien als Energiespeicher aufweist. Dabei sind die Batterien in Parallelschaltung zu den Brennstoffzellen durch einen oder mehrere Schalter elektrisch verbunden. Diese Schalter können durch einen Mikroprozessor kontrolliert betätigt werden.

Technisch ähnliche Aufbauten beschreiben die JP 09 231991 A und die EP 1 225 082 A, bei welchen eine Schalter zwischen der Brennstoffzelle und einer Batterie bzw. einem Verbraucher in Abhängigkeit der von einem Temperatursensor aufgenommenen Werte betätigt wird.

Die WO 99/46140 A beschreibt einen Hybridantrieb für ein Fahrzeug, bei welchem eine Motor als Verbraucher mit einer Brennstoffzelle, einem Energiespeicher sowie Nebenverbrauchern gekoppelt ist. Dabei wird jedoch auf Sensorik im Sinne des oben dargelegten Standes der Technik gänzlich verzichtet.

Ferner ist in der WO 02/20300 A ein von Brennstoffzellen angetriebenes Fahrzeug offenbart, bei welchem ein Mikroprozessor das Zusammenspiel zwischen einem Motor als Verbraucher, einer Brennstoffzelle und einem Energiespeicher steuert. Dabei wird jedoch auf Schalter im Sinne des oben dargelegten Standes der Technik gänzlich verzichtet.

Aufgabe der vorliegenden Erfindung ist, ein Brennstoffzellensystem anzugeben, das bei effektiver Nutzung des zugeführten Brennstoffs auch dann schnelle Änderungen der elektrischen Ausgangsleistung des Systems erlaubt, wenn der zugeführte Brennstoffstrom nur langsam veränderlich ist.

Die Aufgabe wird gelöst durch ein Brennstoffzellensystem mit den Merkmalen des Anspruchs 1.

Ein solches System erlaubt den Betrieb einer Brennstoffzelle mit einer elektrischen Ausgangsleistung unterhalb einer Nennleistung der Zelle für kontinuierlichen Betrieb, indem zum Versorgen eines elektrischen Verbrauchers mit geringer Leistung die Brennstoffzelle intermittierend betrieben wird, wobei in einer Betriebsphase, in der der Schalter geschlossen ist, die Brennstoffzelle sowohl den Verbraucher versorgt als auch den Zwischenspeicher auflädt, während in einer Betriebsphase, in der der Schalter geöffnet ist, der Zwischenspeicher die Versorgung des elektrischen Verbrauchers übernimmt.

Dabei ist in die Steuerschaltung eine Impulsgeneratorschaltung einbezogen, die den Schalter mit Impulsen ansteuert, deren Tastverhältnis in Abhängigkeit von dem wenigstens einen Betriebsparameter variabel ist. Dies ermöglicht wesentlich kürzere Zykluszeiten bzw. den Betrieb des Schalters mit Frequenzen von bis zu 50 kHz. Die benötigte Kapazität des Zwischenspeichers ist bei dieser Lösung wesentlich kleiner, und Spannungschwankungen am Verbraucher, die aus dem intermittierenden Betrieb der Brennstoffzelle resultieren, können wesentlich kleiner gehalten werden.

Da der Schalter in der Lage sein muss, unter Last zu schalten, ist ein Halbleiterschalter, insbesondere ein MOSFET, bevorzugt.

Die von einem solchen Schalter erzeugte Abwärme kann zum Erwärmen der Brennstoffzelle sinnvoll genutzt werden, wenn diese mit dem Schalter thermisch gekoppelt ist. Insbesondere bei einem Brennstoffzellensystem mit einem Stapel von Brennstoffzellen ist der Schalter bevorzugt an einem Ende des Stapels angeordnet, um so Zellen an dem Ende des Stapels warm zu halten, deren Temperatur sonst im Vergleich zu mittleren Zellen unerwünscht abfallen würde. Da die am Schalter im Betrieb anfallende Verlustleistung größer ist als die Heizleistung, die zum Halten des Stapels auf einer gewünschten Betriebstemperatur erforderlich ist, kann eine eigene Heizeinrichtung für den Brennstoffzellenstapel entfallen.

Die Steuerschaltung kann das Öffnen und Schließen des Schalters jeweils anhand erfasster Werte eines einzigen Betriebsparameters steuern, oder sie kann einen Betriebsparameter zum Steuern des Öffnens und einen zweiten, gegebenenfalls von einem anderen Sensor erfassten Betriebsparameter, zum Steuern des Schließens heranziehen.

Als zu überwachende Betriebsparameter kommen insbesondere die Klemmenspannung der Brennstoffzelle oder, im Falle eines Stapels von in Reihe geschalteten Brennstoffzellen, die Klemmenspannung oder insbesondere die minimale Zellenspannung aller Zellen des Stapels, der Innenwiderstand einer einzelnen Brennstoffzelle oder eines Stapels von Brennstoffzellen oder der Wasserstoffpartialdruck der Zellen in Betracht. Es kann dann bei Überschreitung eines oberen Grenzdrucks der Schalter geschlossen und/oder bei Unterschreitung eines unteren Grenzdrucks geöffnet werden.

Dabei können zwei verschiedene Grenzwerte des gleichen Parameters jeweils als Grenzwerte für das Öffnen bzw. das Schließen des Schalters herangezogen werden, oder es können zwei Grenzwerte unterschiedlicher Parameter genutzt werden. Insbesondere wenn als Kriterium für das Öffnen des Schalters eine Zellenspannung eingesetzt wird, kann diese so niedrig gewählt werden, dass sie eine CO-Oxidation in der Zelle/den Zellen ermöglicht. Insbesondere wenn Brennstoffzellen mit Reformergas betrieben werden, das einen Anteil CO enthalten kann, sammelt sich dieses, da es unter normalen Betriebsbedingungen nicht umgesetzt wird, in den Zellen an und führt zu einer "Vergiftung", die sich in einer Zunahme des Innenwiderstands der Zellen und einer Abnahme ihrer Klemmenspannung äußert, wobei das Ausmaß der Vergiftung für die einzelnen Zellen eines Stapels unterschiedlich sein kann.

Die Steuerschaltung kann auch genutzt werden, um korreliert mit der Steuerung des Schalters die Brennstoffzufuhr zu der Brennstoffzelle oder zu einem die Zelle versorgenden Reformer zu steuern.

Weitere Merkmale und Vorteile der Erfindung ergeben sich aus der nachfolgenden Beschreibung von Ausführungsbeispielen mit Bezug auf die beigefügten Figuren. Es zeigen:
- Fig. 1: ein Blockdiagramm eines erfindungsgemäßen mobilen Brennstoffzellensystems;
- Fig. 2: den zeitlichen Verlauf von Klemmenspannungen von Brennstoffzellen des erfindungsgemäßen Systems; und
- Fig. 3: ein Blockdiagramm eines Brennstoffzellensystem gemäß einer zweiten Ausgestaltung der Erfindung.

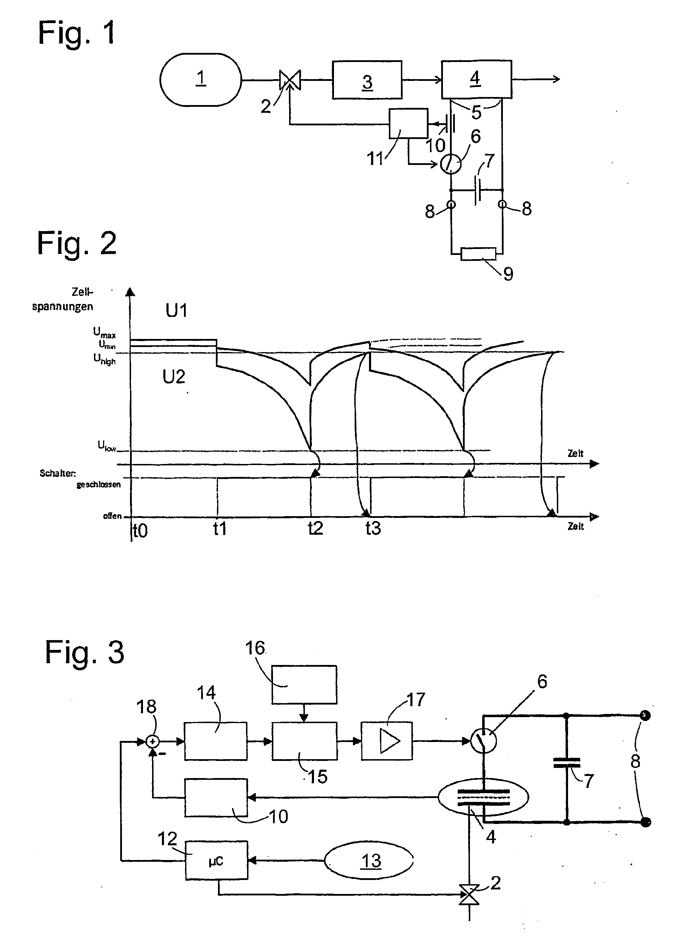

Das Brennstoffzellensystem der Fig. 1 umfasst einen Tank 1 für einen flüssigen Brennstoff wie etwa Benzin, Methanol oder dergleichen, der über ein Regelventil 2 mit einem Reformer 3 verbunden ist. Der Reformer 3 dient zum Umsetzen des Brennstoffs in ein Gasgemisch, das unter anderem molekularen Wasserstoff enthält. Dieses Gasgemisch wird einem an den Reformer 3 angeschlossenen Brennstoffzellenstapel 4 aus einer Mehrzahl von elektrisch in Reihe geschalteten Brennstoffzellen zugeführt. Der Brennstoffzellenstapel 4 hat elektrische Ausgangsanschlussklemmen 5, zwischen denen eine aus der Umsetzung des Wasserstoffs mit Sauerstoff zu Wasser in den Zellen resultierende Spannung anliegt. An die Ausgangsanschlussklemmen 5 sind in Reihe ein Halbleiterschalter, insbesondere ein MOSFET 6 und ein elektrischer Zwischenspeicher 7, hier eine Sekundärbatterie, in Reihe angeschlossen, so dass bei geschlossenem Schalter 6 der Zwischenspeicher 7 mit Strom vom Brennstoffzellenstapel 4 geladen werden kann. Die Pole des Zwischenspeichers 7 bilden gleichzeitig die Lastanschlussklemmen 8 des Brennstoffzellensystems, an die in der Fig. 1 ein elektrischer Verbraucher 9 angeschlossen gezeigt ist. Bei geschlossenem Schalter 6 zieht dieser Verbraucher 9 ebenfalls Strom von dem Brennstoffzellenstapel 4, bei offenem Schalter 6 wird er von dem Zwischenspeicher 7 versorgt.

Ein Sensor 10 zum Erfassen eines Betriebsparameters des Brennstoffzellenstapels ist mit einer Steuerschaltung 11 verbunden. Bei dem Sensor 10 kann es sich um eine Messschaltung zum Erfassen einer Ausgangsspannung oder eines Innenwiderstandes des Brennstoffzellenstapels 4 handeln; es können auch mehrere derartige Messschaltungen vorgesehen sein, um Ausgangsspannung und Innenwiderstand jeweils getrennt für die einzelnen Zellen des Stapels 4 zu erfassen. Bei Überschreitung eines oberen Grenzwiderstandes wird der Schalter geöffnet und/oder bei Unterschreitung eines unteren Grenzwiderstandes geschlossen.

In Betracht kommen auch chemische Sensoren, insbesondere zum Erfassen eines Wasserstoff-Partialdrucks in den Zellen des Stapels. Die Überwachung eines oder mehrerer dieser Parameter - es können auch mehrere Sensoren in Kombination vorgesehen sein - ermöglicht der Steuerschaltung 11 eine Beurteilung des Leistungsvermögens des Brennstoffzellenstapels 4, genauer gesagt des Verhältnisses zwischen Brennstoffzufuhr und durch den Verbraucher 9 abgegriffener elektrischer Leistung. Dabei umfasst das System eine Impulsgeneratorschaltung 16 zum Ansteuern des Schalters 6 mit Impulsen, deren Tastverhältnis in Abhängigkeit von dem wenigstens einen Betriebsparameter variabel ist.
Zunächst soll exemplarisch der Fall betrachtet werden, dass Sensoren 10 jeweils zum Messen von Klemmenspannungen einzelner Zellen des Stapels 4 vorgesehen sind. Wenn der Schalter 6 geschlossen ist und die Brennstoffzellen unbelastet sind, wie im Zeitintervall t0 bis t1 der Fig. 2, ist die gelieferte Ausgangsleistung Null, und die gemessenen Spannungen haben einen konstanten, hohen Wert, der von Zelle zu Zelle geringfügig unterschiedlich sein kann. Die in Fig.2 mit Uₘₐₓ bzw. Uₘᵢₙ bezeichneten Kurven zeigen jeweils die höchste bzw. die niedrigste hohe Spannung aller Zellen des Stapels 4. Wenn zum Zeitpunkt t1 der Schalter 6 geschlossen wird, fallen die Kurven Uₘₐₓ, Uₘᵢₙ zunächst auf einen Belastungswert ab. Die zu diesem Zeitpunkt von dem Stapel 4 gelieferte elektrische Ausgangsleistung ist höher, als der Zufuhr von Primärleistung über das Regelventil 2 entspricht. Die elektrochemischen Bedingungen in den Zellen sind daher nicht stationär, und die Ausgangsspannungen nehmen allmählich ab. Wenn die Steuerschaltung 11 zum Zeitpunkt t2 erfasst, dass die Ausgangsspannung Uₘᵢₙ einen unteren Grenzwert U_{low} erreicht, öffnet sie den Schalter 6, so dass kein Strom mehr fließt und die Spannungen Uₘₐₓ, Uₘᵢₙ zunächst abrupt ansteigen. Es schließt sich eine Phase des allmählichen Anstiegs an, in der sich die Tatsache wiederspiegelt, dass keine elektrische Leistung aus dem Stapel 4 gezogen wird, dass aber gleichzeitig Brennstoff nachfließt, der den zuvor bei geöffnetem Schalter in Übermaß verbrauchten ersetzt. Sobald die Spannung Uₘᵢₙ einen oberen Grenzwert U_{high} erreicht (Zeitpunkt t3) öffnet die Steuerschaltung 11 den Schalter 6 erneut, und der Zyklus wiederholt sich. Im Gegensatz zur Spannung Uₘᵢₙ oszilliert die Spannung an den Lastanschlussklemmen 8 nur in engen Grenzen, da sie von dem Zwischenspeicher 7 gepuffert wird.

Im Prinzip ist es mit dem in Fig. 1 gezeigten Aufbau möglich, durch einfaches Einstellen einer Gasdurchflussrate am Regelventil 2 die elektrische Ausgangsleistung des Stapels 4 zu regeln. Wie man leicht sieht, sind bei als konstant angenommenem Widerstand des Verbrauchers 9 die Phasen, in denen der Schalter 6 geschlossen ist, um so kürzer und die Phasen mit offenem Schalter um so länger, je geringer die Brennstoffzufuhrrate ist. Während der Schalter geschlossen ist, ist die abgegriffene elektrische Leistung größer als die in Form von Brennstoff zugeführte Leistung; die Zelle ist also überlastet, und ihre Ausgangsspannung sinkt ab. Während der Schalter offen ist, wird der Verbraucher 9 aus dem Zwischenspeicher 7 versorgt, und die Zelle erholt sich. Durch das Zusammenspiel des Schalters 6 und des Zwischenspeichers 7 sind Änderungen der elektrischen Ausgangsleistung des Brennstoffzellenstapels 4 mit einer höheren Geschwindigkeit realisierbar als derjenigen, mit dem der vom Reformer 3 gelieferte Brennstoffstrom einer veränderten Leistungsaufnahme durch den Verbraucher 9 nachgeführt werden kann.

Technisch nützlicher noch als die Möglichkeit, die elektrische Leistung des Brennstoffzellensystems durch die Brennstoffzufuhr zu regeln, ist die Möglichkeit, umgekehrt die Steuerschaltung 11 die Brennstoffzufuhrrate am Regelventil 2 anhand der von dem Verbraucher 9 benötigten Leistung regeln zu lassen. Kurzfristige Schwankungen des Leistungsbedarfs des Verbrauchers 9, wie sie insbesondere bei mobilen Anwendungen auftreten können, können zunächst vom Zwischenspeicher 7 aufgefangen werden. Wenn ein erhöhter Leistungsbedarf länger anhält, als der Speicherkapazität des Zwischenspeichers 7 entspricht, muss die Brennstoffzufuhr nachgeregelt werden. Die Steuerschaltung 11 ist in der Lage, anhand der Schaltzeiten t1, t2, t3, ... den Leistungsbedarf abzuschätzen. Je größer dieser ist, um so kürzer ist die Zeitspanne [t1, t2] vom Schließen des Schalters bis zum Erreichen des unteren Grenzwerts U_{low} durch die Spannung Uₘᵢₙ. Die Dauer der anschließenden Erholungsphase [t2, t3] hängt hingegen im wesentlichen von der Brennstoffzufuhrrate ab. Die Steuerschaltung 11 hält daher das Verhältnis dieser zwei Zeitspannen zueinander konstant, indem sie, wenn sie eine Verkürzung des Zeitintervalls [t1, t2] feststellt, das Regelventil 2 ansteuert, um dessen Durchsatz heraufzusetzen und umgekehrt dessen Durchsatz reduziert, wenn die Zeitspanne [t1, t2] zu lang wird.

Wie bereits oben erwähnt, kann ein im vom Reformer gelieferten Gasgemisch enthaltener CO-Anteil zu einer Vergiftung der Zellen des Stapels 4 führen, mit der Folge, dass deren Innenwiderstand zu- und ihr Leistungsvermögen abnimmt. Solches in einer Brennstoffzelle akkumuliertes Kohlenmonoxid kann abgebaut werden, indem durch eine vorübergehende hohe elektrische Belastung ihre Ausgangsspannung unter einen Grenzwert gedrückt wird, ab dem die Verbrennung des CO in der Zelle einsetzt. Der untere Spannungsgrenzwert U_{low} kann unterhalb dieses Grenzwert gewählt werden, so dass in einer Belastungsphase jeweils kurz vor Schließen des Schalters 6 in der Zelle, die die Spannung Uₘᵢₙ liefert und die im allgemeinen die am stärksten mit CO vergiftete Zelle sein wird, ein CO-Abbau stattfindet. Wenn diese Abbauphase lang genug ist, um das Kohlenmonoxid der Zelle im wesentlichen vollständig abzubauen, ist im anschließenden Zyklus deren Leistungsfähigkeit wieder hergestellt, so dass anschließend eine andere Zelle des Stapels die kleinste Ausgangsspannung Uₘᵢₙ liefert. Wenn die Dauer der Abbauphase für einen vollständigen CO-Abbau nicht ausreicht, so verhindert sie dennoch eine weitere Abnahme der Leistungsfähigkeit der Zelle und erlaubt einen Weiterbetrieb des Stapels 4, bis sich in allen seinen Zellen eine solche Menge an CO angesammelt hat, dass eine Regenerierung des gesamten Stapels erforderlich ist.

Für den Fall, dass die CO-Vergiftung nur eine untergeordnete Rolle spielt, ist der Betrieb unterhalb von kleinen, den CO-Abbau ermöglichenden Zellspannungen nicht bzw. nur von Zeit zu Zeit nötig. In diesem Fall kann es wünschenswert sein, die Schaltfrequenz des Schalters 6 zu erhöhen, um Schwankungen der Spannung an den Lastanschlussklemmen 8 zu reduzieren bzw. die im Zwischenspeicher 7 zu speichernde Energiemenge zu verringern und somit einen kleineren, leichteren und preiswerteren Zwischenspeicher verwenden zu können.

Ein Brennstoffzellensystem gemäß einer zweiten Ausgestaltung der Erfindung, das diese Anforderungen erfüllt, ist in Fig. 3 gezeigt. Auch diese Ausgestaltung umfasst einen Brennstoffzellenstapel 4 und einen Schalter 6, die in Reihe zwischen zwei Lastanschlussklemmen 8 geschaltet sind, sowie einen parallel zum Brennstoffzellenstapel 4 und dem Schalter 6 angeordneten Zwischenspeicher 7. Genau so wie mit Bezug auf Fig. 1 beschrieben, sind ein oder mehrere Sensoren 10 an dem Brennstoffzellenstapel 4 angeordnet. Ein Mikrocontroller 12 liefert in Abhängigkeit von einer in einem Steuerprogramm 13 verkörperten Betriebsstrategie Sollwerte für die von dem oder den Sensoren 10 erfassten Betriebsparameter. Ein Subtraktionsglied 18 oder ein Operationsverstärker ermittelt eine Differenz zwischen Betriebsparameter-Mess- und Sollwerten und führt diese einem Regler 14 zu, der sie in ein Modulationssignal für einen PWM-Impulsgenerator 15 umformt. Dieser liefert ein Impulssignal mit einem von einem Taktgenerator 16 vorgegebenen Takt und einem von dem Modulationssignal vorgegebenen Tastverhältnis an einen Treiber 17, der den MOSFET-Schalter 6 je nach Pegel des vom Modulator 15 empfangenen Steuersignals offen bzw. geschlossen hält. Die Frequenz des pulsbreitenmodulierten Signals kann zwischen 0,1 und 50 kHz betragen, wobei die Welligkeit der Spannung an den Lastanschlussklemmen 8 um so geringer und die erforderliche Speicherkapazität des Zwischenspeichers 7 um so kleiner ist, je höher diese Frequenz ist.

Da bei der Ausgestaltung der Fig. 3 die Abnahme der Zellspannung unter Last, wie in Fig. 2 gezeigt, nicht beobachtet werden kann, muss die von einem an die Lastanschlussklemmen 8 angeschlossenen Verbraucher aufgenommene Leistung in der Regelstrategie 13 berücksichtigt werden. Dies kann z.B. mit Hilfe von (nicht dargestellten) an die Lastanschlussklemmen 8 angeschlossenen Sensoren zum Erfassen der über sie fließenden elektrischen Leistung oder Stromstärke geschehen, oder indem dem Mikrocontroller 12 ein Steuersignal zugeführt wird, das in gleicher Weise auch dem Verbraucher zugeführt wird, um dessen Leistung zu steuern und folglich für die von ihm aufgenommene Leistung repräsentativ ist.

Auch bei dieser Ausgestaltung steuert der Mikrocontroller 12 sinnvollerweise auch den Brennstoffdurchsatz durch ein Regelventil 2, das entweder den direkten Wasserstoffzustrom zum Brennstoffzellenstapel 4 oder den Zustrom von Brennstoff zu einem dem Stapel 4 vorgeschalteten Reformer kontrolliert.

Bei beiden Ausgestaltungen ist der Schalter 6 jeweils an einer Stirnseite des Brennstoffzellenstapels 4 angeordnet, um mit seiner Abwärme die stirnseitigen Brennstoffzellen zusätzlich zu beheizen, die anderenfalls bei Verwendung einer Heizung mit gleicher Leistung für alle Brennstoffzellen niedriger sein würde als die der in der Mitte des Stapels liegenden Zellen. Der Schalter 6 wird auf diese Weise auf einer Temperatur im Bereich von 70 bis 95°C gehalten, die von Standard-Halbleitern gut vertragen wird. Da seine Abwärme für die Temperierung der Brennstoffzellen genutzt wird, belastet sie den Gesamtwirkungsgrad des erfindungsgemäßen Systems nur in dem Maße, in dem die Verlustleistung des Schalters 6 die zum Temperieren der Brennstoffzellen ohnehin benötigte Heizleistung übersteigt.

## Patentansprüche

1. Brennstoffzellensystem mit wenigstens einer Brennstoffzelle und einem elektrischen Zwischenspeicher (7), der mit gemeinsamen Versorgungsanschlüssen (8) für einen elektrischen Verbraucher (9) verbunden ist, wobei es wenigstens einen Sensor (10) zum Erfassen eines Betriebsparameters der wenigstens einen Brennstoffzelle (4), einen Schalter zum elektrischen Verbinden und/oder Trennen der Brennstoffzelle von dem Zwischenspeicher (7) und den Versorgungsanschlüssen (8) sowie eine Steuerschaltung (11) zum Öffnen und Schließen des Schalters (6) in Abhängigkeit von dem erfassten Betriebsparameter aufweist,
**dadurch gekennzeichnet,**
**dass** es eine Impulsgeneratorschaltung (16) zum Ansteuern des Schalters (6) mit Impulsen umfasst, deren Tastverhältnis in Abhängigkeit von dem wenigstens einen Betriebsparameter variabel ist.

2. Brennstoffzellensystem nach Anspruch 1,
**dadurch gekennzeichnet,**
**dass** der Schalter (6) ein Halbleiterschalter, insbesondere ein MOSFET ist.

3. Brennstoffzellensystem nach Anspruch 1 oder 2,
**dadurch gekennzeichnet,**
**dass** der Schalter (6) und die Brennstoffzelle (4) thermisch gekoppelt sind.

4. Brennstoffzellensystem nach Anspruch 3,
**dadurch gekennzeichnet,**
**dass** es einen Stapel von Brennstoffzellen (4) umfasst und
**dass** der Schalter (6) an einem Ende des Stapels angeordnet ist.

5. Brennstoffzellensystem nach einem der vorhergehenden Ansprüche,
**dadurch gekennzeichnet,**
**dass** die Steuerschaltung (11) ausgelegt ist, den Schalter (6) anhand eines einzigen Betriebsparameters zu öffnen und zu schließen.

6. Brennstoffzellensystem nach einem der vorhergehenden Ansprüche,
**dadurch gekennzeichnet,**
**dass** die Steuerschaltung (11) ausgelegt ist, den Schalter (6) anhand eines ersten Betriebsparameters zu öffnen und anhand eines zweiten Betriebsparameters zu schließen.

7. Brennstoffzellensystem nach einem der vorhergehenden Ansprüche,
**dadurch gekennzeichnet,**
**dass** die Frequenz der von der Impulsgeneratorschaltung (16) erzeugten Impulse zwischen 0,1 und 50 kHz beträgt.

8. Brennstoffzellensystem nach einem der vorhergehenden Ansprüche,
**dadurch gekennzeichnet,**
**dass** als Sensor (10) ein Spannungssensor zum Erfassen der Klemmenspannung der wenigstens einen Brennstoffzelle (4) vorgesehen ist.

9. Brennstoffzellensystem nach Anspruch 8,
**dadurch gekennzeichnet,**
**dass** die Steuerschaltung (11) ausgelegt ist, bei Überschreitung einer oberen Grenzspannung den Schalter (6) zu schließen und/oder ihn bei Unterschreitung einer unteren Grenzspannung zu öffnen.

10. Brennstoffzellensystem nach einem der vorhergehenden Ansprüche,
**dadurch gekennzeichnet,**
**dass** als Sensor ein Innenwiderstandssensor zum Erfassen des Innenwiderstandes der wenigstens einen Brennstoffzelle vorgesehen ist.

11. Brennstoffzellensystem nach Anspruch 10,
**dadurch gekennzeichnet,**
**dass** die Steuerschaltung (11) ausgelegt ist, bei Überschreitung eines oberen Grenzwiderstandes den Schalter (6) zu schließen und/oder ihn bei Unterschreitung eines unteren Grenzwiderstandes zu öffnen.

12. Brennstoffzellensystem nach einem der vorhergehenden Ansprüche,
**dadurch gekennzeichnet,**
**dass** als Sensor (10) ein Drucksensor zum Erfassen des Wasserstoffpartialdrucks der wenigstens einen-Brennstoffzelle vorgesehen ist.

13. Brennstoffzellensystem nach Anspruch 12,
**dadurch gekennzeichnet,**
**dass** die Steuerschaltung (11) ausgelegt ist, bei Überschreitung eines oberen Grenzdrucks den Schalter (6) zu schließen und/oder ihn bei Unterschreitung eines unteren Grenzdrucks zu öffnen.

14. Brennstoffzellensystem nach einem der vorhergehenden Ansprüche,
**dadurch gekennzeichnet,**
**dass** in wenigstens einer Betriebsgaszufuhrleitung ein Ventil angeordnet ist, dessen Durchsatz von der Steuerschaltung anhand des erfassten Betriebsparameters geregelt ist.

15. Brennstoffzellensystem nach einem der vorhergehenden Ansprüche,
**dadurch gekennzeichnet,**
**dass** der wenigstens einen Brennstoffzelle ein Reformer (3) als Wasserstoffquelle vorgeschaltet ist.

16. Brennstoffzellensystem nach Anspruch 15,
**dadurch gekennzeichnet,**
**dass** der Durchsatz des Reformers (3) von der Steuerschaltung (11) anhand des erfassten Betriebsparameters geregelt ist.

## Claims

1. Fuel cell system having at least one fuel cell and an intermediate electrical accumulator (7), which is connected to common supply connections (8) for an electrical consumer (9), the system having at least one sensor (10) for recording an operating parameter of the at least one fuel cell (4), a switch for electrically connecting and/or isolating the fuel cell with respect to the intermediate accumulator (7) and the supply connections (8), and a control circuit (11) for opening and closing the switch (6) as a function of the operating parameter recorded, **characterized in that** it comprises a pulse generator circuit (16) for actuating the switch (6) using pulses, the duty factor of which is variable as a function of the at least one operating parameter.

2. Fuel cell system according to Claim 1, **characterized in that** the switch (6) is a semiconductor switch, in particular a MOSFET.

3. Fuel cell system according to Claim 1 or 2, **characterized in that** the switch (6) and the fuel cell (4) are thermally coupled.

4. Fuel cell system according to Claim 3, **characterized in that** it comprises a stack of fuel cells (4), and **in that** the switch (6) is arranged at one end of the stack.

5. Fuel cell system according to one of the preceding claims, **characterized in that** the control circuit (11) is designed to open and close the switch (6) on the basis of a single operating parameter.

6. Fuel cell system according to one of the preceding claims, **characterized in that** the control circuit (11) is designed to open the switch (6) on the basis of a first operating parameter and to close it on the basis of a second operating parameter.

7. Fuel cell system according to one of the preceding claims, **characterized in that** the frequency of the pulses generated by the pulse generator circuit (16) is between 0.1 and 50 kHz.

8. Fuel cell system according to one of the preceding claims, **characterized in that** the sensor (10) provided is a voltage sensor for recording the terminal voltage of the at least one fuel cell (4).

9. Fuel cell system according to Claim 8, **characterized in that** the control circuit (11) is designed to close the switch (6) in the event of an upper limit voltage been exceeded and/or to open the switch in the event of a lower limit voltage being undershot.

10. Fuel cell system according to one of the preceding claims, **characterized in that** the sensor provided is an internal resistance sensor for recording the internal resistance of the at least one fuel cell.

11. Fuel cell system according to Claim 10, **characterized in that** the control circuit (11) is designed to close the switch (6) in the event of an upper limit resistance being exceeded and/or to open the switch in the event of a lower limit resistance being undershot.

12. Fuel cell system according to one of the preceding claims, **characterized in that** the sensor (10) provided is a pressure sensor for recording the hydrogen partial pressure of the at least one fuel cell.

13. Fuel cell system according to Claim 12, **characterized in that** the control circuit (11) is designed to close the switch (6) in the event of an upper limit pressure being exceeded and/or to open the switch in the event of a lower limit pressure being undershot.

14. Fuel cell system according to one of the preceding claims, **characterized in that** a valve whose throughput is regulated by the control circuit on the basis of the recorded operating parameter is arranged in at least one operation gas feed line.

15. Fuel cell system according to one of the preceding claims, **characterized in that** a reformer (3) as hydrogen source is connected upstream of the at least one fuel cell.

16. Fuel cell system according to Claim 15, **characterized in that** throughput of the reformer (3) is regulated by the control circuit (11) on the basis of the recorded operating parameter.

## Revendications

1. Système de pile à combustible avec au moins une pile à combustible et un accumulateur électrique intermédiaire (7), qui est raccordé à des raccords d'alimentation communs (8) pour un consommateur électrique (9), dans lequel il comprend au moins un capteur (10) pour détecter un paramètre de fonctionnement de la au moins une pile à combustible (4), un interrupteur pour la liaison et/ou la séparation électrique de la pile à combustible et de l'accumulateur intermédiaire (7) et des raccords d'alimentation (8), ainsi qu'un circuit de commande (11) pour ouvrir et fermer l'interrupteur (6) en fonction du paramètre de fonctionnement détecté, **caractérisé en ce qu'**il comprend un circuit de générateur d'impulsions (16) pour commander l'interrupteur (6) avec des impulsions, dont le taux d'impulsions est variable en fonction dudit au moins un paramètre de fonctionnement.

2. Système de pile à combustible selon la revendication 1, **caractérisé en ce que** l'interrupteur (6) est un interrupteur à semi-conducteur, en particulier un MOSFET.

3. Système de pile à combustible selon la revendication 1 ou 2, **caractérisé en ce que** l'interrupteur (6) et la pile à combustible (4) sont couplés thermiquement.

4. Système de pile à combustible selon la revendication 3, **caractérisé en ce qu'**il comprend un empilement de piles à combustible (4) et **en ce que** l'interrupteur (6) est disposé à une extrémité de l'empilement.

5. Système de pile à combustible selon l'une quelconque des revendications précédentes, **caractérisé en ce que** le circuit de commande (11) est conçu pour ouvrir et fermer l'interrupteur (6) à l'aide d'un seul paramètre de fonctionnement.

6. Système de pile à combustible selon l'une quelconque des revendications précédentes, **caractérisé en ce que** le circuit de commande (11) est conçu pour ouvrir l'interrupteur (6) à l'aide d'un premier paramètre de fonctionnement et le fermer à l'aide d'un deuxième paramètre de fonctionnement.

7. Système de pile à combustible selon l'une quelconque des revendications précédentes, **caractérisé en ce que** la fréquence des impulsions produites par le circuit de générateur d'impulsions (16) est comprise entre 0,1 et 50 kHz.

8. Système de pile à combustible selon l'une quelconque des revendications précédentes, **caractérisé en ce que** l'on prévoit comme capteur (10) un détecteur de tension pour détecter la tension aux bornes de la au moins une pile à combustible (4).

9. Système de pile à combustible selon la revendication 8, **caractérisé en ce que** le circuit de commande (11) est conçu pour fermer l'interrupteur (6) en cas de dépassement d'une tension limite supérieure et/ou pour l'ouvrir en cas de descente en dessous d'une tension limite inférieure.

10. Système de pile à combustible selon l'une quelconque des revendications précédentes, **caractérisé en ce que** l'on prévoit comme capteur un détecteur de résistance interne pour détecter la résistance interne de la au moins une pile à combustible.

11. Système de pile à combustible selon la revendication 10, **caractérisé en ce que** le circuit de commande (11) est conçu pour fermer l'interrupteur (6) en cas de dépassement d'une résistance limite supérieure et/ou pour l'ouvrir en cas de descente en dessous d'une résistance limite inférieure.

12. Système de pile à combustible selon l'une quelconque des revendications précédentes, **caractérisé en ce que** l'on prévoit comme capteur (10) un capteur de pression pour détecter la pression partielle d'hydrogène de la au moins une pile à combustible.

13. Système de pile à combustible selon la revendication 12, **caractérisé en ce que** le circuit de commande (11) est conçu pour fermer l'interrupteur (6) en cas de dépassement d'une pression limite supérieure et/ou pour l'ouvrir en cas de descente en dessous d'une pression limite inférieure.

14. Système de pile à combustible selon l'une quelconque des revendications précédentes, **caractérisé en ce qu'**une soupape est disposée dans au moins une conduite d'arrivée de gaz de service, soupape dont le débit est régulé par le circuit de commande à l'aide du paramètre de fonctionnement détecté.

15. Système de pile à combustible selon l'une quelconque des revendications précédentes, **caractérisé en ce qu'**un reformeur (3) faisant office de source d'hydrogène est disposé avant la au moins une pile à combustible.

16. Système de pile à combustible selon la revendication 15, **caractérisé en ce que** le débit du reformeur (3) est régulé par le circuit de commande (11) à l'aide du paramètre de fonctionnement détecté.
